# EUROPEAN PATENT SPECIFICATION

(11) **EP 3 885 215 B1**
(45) Date of publication and mention of the grant of the patent: **14.06.2023**
(21) Application number: 19910969.5
(22) Date of filing: 28.06.2019
(51) Int. Cl.: B60W 30/06, G06K 9/00, G01C 21/36, B62D 15/02, H04W 4/44, H04W 4/021, G06V 20/56

(54) **PARKING ASSISTANCE METHOD BASED ON SERVICE DEVICE, AND SERVICE DEVICE**
EINPARKASSISTENZVERFAHREN AUF BASIS VON DIENSTVORRICHTUNG SOWIE DIENSTVORRICHTUNG
PROCÉDÉ D'AIDE AU STATIONNEMENT BASÉ SUR UN DISPOSITIF DE SERVICE ET DISPOSITIF DE SERVICE

(30) Priority: 21.01.2019 CN 201910053207
(43) Date of publication of application: 29.09.2021
(73) Proprietor: Guangzhou Xiaopeng Motors Technology Co., Ltd., Guangzhou (CN)
(72) Inventor: LIU, Yu, Guangzhou, Guangdong 510000 (CN); FU, Qunyu, Guangzhou, Guangdong 510000 (CN); LAI, Yi, Guangzhou, Guangdong 510000 (CN); LUO, Gongwu, Guangzhou, Guangdong 510000 (CN)
(74) Representative: Yip, Matthew Wing Yu
(86) International application number: PCT/CN2019/093475
(87) International publication number: WO 2020/151190

(56) References cited:
- CN-A- 109 131 236
- CN-A- 109 131 252
- CN-A- 109 808 681
- CN-U- 205 844 523
- DE-A1-102010 016 579
- JP-A- 2014 035 746
- US-A1- 2017 320 433

## Description

### Field of Invention

The present invention relates to automobile technologies and, in particular, to service facility based methods of assisted parking and such service facilities.

### Background

As the number of private automobiles increases, the car washing industry has transitioned from conventional manual car washing to car washing by machines. This does not only represent a change of consumer habits, but also a new era of automation of the car washing industry. In a current car washing scenario, a driver needs to first drive a vehicle to a preset car washing area in a car washer. In order to accurately park the vehicle in the car washing area, a car washing station typically employs workers to guide drivers. However, in real life scenarios, workers may sometimes give wrong instructions due to obstruction by physical objects or blind points, and increase time required by the drivers to park their vehicles into the car washing area, making it difficult to reach satisfactory parking guidance results.

JP 2014-35746 A shows the features of the preamble of claims 1 and 8 and discloses a parking assistance device that enables the driver of a vehicle to park the vehicle at an optimum position while easily checking the magnitude of power that a power receiving part receives from a power transmitting part. CN 109131236 A discloses an unattended car washing guiding device that comprises a control device, a display device respectively arranged on both sides of the car washing machine, and a detection means for transmitting an overrun signal to the control means when the vehicle to be washed is detected to exceed a limited range.

### Summary of Invention

The present invention discloses a service facility based method of assisted parking and such a service facility, which allow automatic parking guidance and improve efficiency of vehicle parking in a service area.

In accordance with the present invention, there are provided a method of assisted parking based on a service facility as recited by claim 1, and a service facility as recited by claim 8. Preferred features are set out in the dependent claims.

According to a first aspect of the present invention, there is provided a method of assisted parking based on a service facility, the method comprising:
detecting, by position detection devices of the service facility, whether a vehicle is parked within a service area predetermined by the service facility; and
if the vehicle is not parked within the predetermined service area, causing a vehicle terminal to display driving assistance information for guiding the vehicle to park within the predetermined service area,
wherein the position detection devices are provided at a first position detection point and a second position detection point in the service facility, wherein the first position detection point is located at a side of the predetermined service area that is nearest to an entrance of the service facility, and wherein the second position detection point is located at a side of the predetermined service area that is nearest to an exit of the service facility,
wherein said detecting, by position detection devices of the service facility, whether a vehicle is parked within a predetermined service area comprising:
   if neither the position detection device at the first position detection point nor the position detection device at the second position detection point detects the vehicle, determining that the vehicle is not parked within the service area predetermined by the service facility;
   if both the position detection device at the first position detection point and the position detection device at the second position detection point detect the vehicle, determining that the vehicle is not parked within the service area predetermined by the service facility; and
   if the position detection device at the first position detection point detects the vehicle and the position detection device at the second position detection point does not detect the vehicle, determining that the vehicle is parked within the service area predetermined by the service facility,
   the method further comprising:
      if the vehicle is parked within the predetermined service area, activating a service operation for the vehicle.

According to the first aspect of the present invention, in a preferred embodiment, said causing a vehicle terminal to display driving assistance information for guiding the vehicle to park within the predetermined service area comprises:
if neither the position detection device at the first position detection point nor the position detection device at the second position detection point detects the vehicle, causing the vehicle terminal to output first indication information to direct the vehicle to move forward; and
if both the position detection device at the first position detection point and the position detection device at the second position detection point detect the vehicle, causing the vehicle terminal to output second indication information to direct the vehicle to reverse.

According to the first aspect of the present invention, in a preferred embodiment, the method further comprises:
if neither the position detection device at the first position detection point nor the position detection device at the second position detection point detects the vehicle, adjusting an indicator light of the service facility to a first state for directing the vehicle to move forward;
if both the position detection device at the first position detection point and the position detection device at the second position detection point detect the vehicle, adjusting an indicator light of the service facility to a second state for directing the vehicle to reverse; and
if the position detection device at the first position detection point detects the vehicle and the position detection device at the second position detection point does not detect the vehicle, adjusting an indicator light of the service facility to a third state for directing the vehicle to enter a parking state.

According to the first aspect of the present invention, in a preferred embodiment, the position detection devices are provided at a third position detection point and a fourth position detection point in the service facility, and the method further comprises:
if the position detection device at the third position detection point detects the vehicle, sending a vehicle entry message to a server to cause the server to perform corresponding post-entry operations; and
if the position detection device at the fourth position detection point detects that the vehicle passes the fourth position detection point within a preset period of time, sending a vehicle departure message to the server to cause the server to perform corresponding post-departure operations.

According to the first aspect of the present invention, in a preferred embodiment, the method further comprises:
upon detecting entry of the vehicle into a predetermined license plate recognition area in the service facility, capturing an image of a license plate of the vehicle and sending the image to the server, thereby causing the server to acquire a user account number corresponding to the vehicle based on the image of the license plate and identifying the vehicle terminal based on the user account number; and
sending, to the server, captured surround view images of the vehicle, and sending, by the server, the surround view images to the vehicle terminal for output and display.

According to a second aspect of the present invention, there is provided a service facility, which comprises:
a detection unit configured to detect, by position detection devices of the service facility, whether a vehicle is parked within a service area predetermined by the service facility;
a communication unit configured to cause a vehicle terminal to display driving assistance information for guiding the vehicle to park within the predetermined service area when the detection unit detects that the vehicle is not parked within the predetermined service area; and
a service unit configured to activate a service operation for the vehicle when the detection unit detects that the vehicle is parked within the predetermined service area,
wherein a first position detection point and a second position detection point in the service facility are provided with the position detection devices, wherein the first position detection point is located at a side of the predetermined service area that is nearest to an entrance of the service facility, and wherein the second position detection point is located at a side of the predetermined service area that is nearest to an exit of the service facility, and wherein the detection unit is configured to:
   determine that the vehicle is not parked within the service area predetermined by the service facility if neither the position detection device at the first position detection point nor the position detection device at the second position detection point detects the vehicle;
   determine that the vehicle is not parked within the service area predetermined by the service facility if both the position detection device at the first position detection point and the position detection device at the second position detection point detect the vehicle; and
   determine that the vehicle is parked within the service area predetermined by the service facility if the position detection device at the first position detection point detects the vehicle and the position detection device at the second position detection point does not detect the vehicle.

According to the second aspect of the present invention, in a preferred embodiment, the communication unit comprises:
a first communication sub-unit configured to cause the vehicle terminal to output first indication information for directing the vehicle to move forward when neither the position detection device at the first position detection point nor the position detection device at the second position detection point detects the vehicle; and
a second communication sub-unit configured to cause the vehicle terminal to output second indication information for directing the vehicle to reverse when both the position detection device at the first position detection point and the position detection device at the second position detection point detect the vehicle.

According to the second aspect of the present invention, in a preferred embodiment, the service facility further comprises an adjustment unit configured to:
adjust an indicator light of the service facility to a first state for directing the vehicle to move forward when neither the position detection device at the first position detection point nor the position detection device at the second position detection point detects the vehicle;
adjust an indicator light of the service facility to a second state for directing the vehicle to reverse when both the position detection device at the first position detection point and the position detection device at the second position detection point detect the vehicle; and
adjust an indicator light of the service facility to a third state for directing the vehicle to enter a parking state when the position detection device at the first position detection point detects the vehicle and the position detection device at the second position detection point does not detect the vehicle.

According to the second aspect of the present invention, in a preferred embodiment, the position detection devices are provided at a third position detection point and a fourth position detection point in the service facility, and the service facility further comprises a transceiver unit configured to:
send a vehicle entry message to a server to cause the server to perform corresponding post-entry operations when the position detection device at the third position detection point detects the vehicle; and
send a vehicle departure message to the server to cause the server to perform corresponding post-departure operations when the position detection device at the fourth position detection point detects that the vehicle passes the fourth position detection point within a preset period of time.

According to the second aspect of the present invention, in a preferred embodiment, the service facility further comprises:
an image capturing unit configured to control a camera to capture an image of a license plate of the vehicle when detecting entry of the vehicle into a predetermined license plate recognition area in the service facility; and
the transceiver unit is further configured to send the image of the license plate to the server, thereby causing the server to acquire a user account number corresponding to the vehicle based on the image of the license plate, and identify the vehicle terminal based on the user account number and cause the vehicle terminal to display surround view images captured by panoramic cameras of the vehicle, wherein the panoramic cameras are cameras installed on the periphery of the vehicle.

According to a third aspect of the present invention, there is provided a service facility, which comprises:
a memory device storing executable program code; and
a processor coupled to the memory device, wherein
the processor is operable to execute the program code stored in the memory device to perform any one of the methods in accordance with the first aspect of the invention.

According to a fourth aspect of the present invention, there is provided a computer-readable storage medium, which stores program code, execution of which causes a computer to perform any one of the methods in accordance with the first aspect of the invention.

According to a fifth aspect of the present invention, there is provided a computer program product which, when run on a computer, causes the computer to perform any one of the methods in accordance with the first aspect of the invention.

Compared to the conventional art, the present invention can achieve the beneficial effects set out below.

Position detection devices are provided in the service facility, which detect whether a vehicle is parked within a car washing area, and when the vehicle is not parked within the car washing area, cause a vehicle terminal to output driving assistance information to guide the vehicle to park into the car washing area. Automatic detection of the parking state of the vehicle by the service facility allows human errors to be avoided. By displaying driving assistance information via the vehicle terminal, a user sitting in the vehicle is provided with clear guiding instructions, thereby performing guided parking without human intervention from personnel at the car washing station and improving efficiency of vehicle parking in the service area.

### Brief Description of Drawings

In order to clearly illustrate the technical solutions in the embodiments of the present invention, brief description of the drawings pertinent to the embodiments will be provided. It should be apparent to a skilled person in the art that the drawings described below are for the purpose of illustrating embodiments of the invention only. The skilled person will be able to devise further drawings based on the provided drawings without exercising any inventive efforts.
FIG. 1 is a schematic structural diagram of a car washing system according to an embodiment of the present invention;
FIG. 2 is a flow chart of a method of assisted parking based on a service facility according to an embodiment of the present invention;
FIG. 3 is a flow chart of another method of assisted parking based on a service facility according to an embodiment of the present invention;
FIG. 4 illustrates a scenario of license plate recognition as disclosed in accordance with an embodiment of the present invention;
FIG. 5 illustrates a scenario of a vehicle entering a detection site according to an embodiment of the present invention;
FIG. 6 illustrates a scenario of a vehicle not yet reached a car washing area in accordance with an embodiment of the present invention;
FIG. 7 illustrates a scenario of a vehicle exceeded a car washing area in accordance with an embodiment of the present invention;
FIG. 8 illustrates a scenario of a vehicle parked within a car washing area according to an embodiment of the present invention;
FIG. 9 illustrates a scenario of a vehicle departing from a detection site according to an embodiment of the present invention;
FIG. 10 shows an exemplary display interface of a vehicle terminal outputting a parking reminder message according to an embodiment of the present invention;
FIG. 11 shows an exemplary display interface of a vehicle terminal outputting driving assistance information according to an embodiment of the present invention;
FIG. 12 is a flow chart of another method of assisted parking based on a service facility according to an embodiment of the present invention;
FIG. 13 is a flow chart of yet another method of assisted parking based on a service facility according to an embodiment of the present invention;
FIG. 14 is a schematic structural diagram of a service facility according to an embodiment of the present invention;
FIG. 15 is a schematic structural diagram of another service facility according to an embodiment of the present invention.

### Detailed Description

The technical solutions in the embodiments of the invention will now be described clearly and completely with reference to the accompanying drawings. The described embodiments merely show some but not all possible ways for implementing the invention. All other embodiments that persons of ordinary skill in the art could derive without inventive efforts fall within the scope of the disclosure.

It is to be noted that terms "comprising", "including" and any equivalent variations thereof, used in this disclosure are intended to cover the listed matters non-exclusively. For example, a process, method, system, product, or device that comprises a series of steps or units is not meant to include the listed steps or units only, but may optionally include other steps or units not listed or any steps or units inherent to such a process, method, system, product, or device.

Embodiments of the present invention disclose a method of assisted parking based on a service facility and such a service facility, which are capable of automatically performing parking guidance to improve efficiency of a vehicle parking into a service area. Details are described below.

In embodiments of the present invention, the service facility may be a car washer, an electric vehicle charging pile, an automated parking machine, or any relevant facilities that may provide vehicle-related services. Methods of assisted parking and related service facilities are described in connection with a car washer as an example, but application of the methods of assisted parking and related service facilities are not limited to car washers.

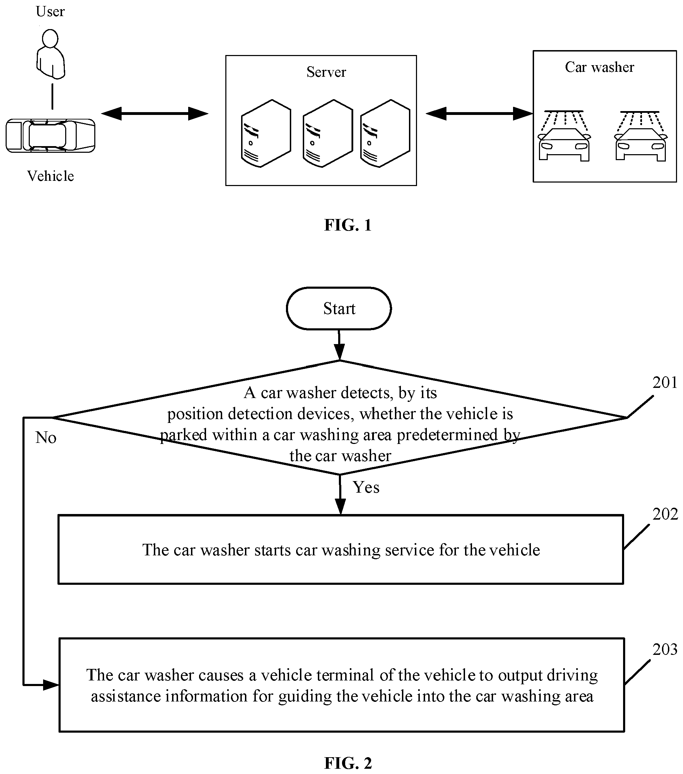

In order to facilitate understanding the service facility based method of assisted parking and such a service facility of the present invention, the system architecture to which the embodiments of the present invention are applicable is first described below. FIG. 1 is a schematic structural diagram of a car washing system. The car washing system may include a car washer, a server, and a vehicle equipped with a vehicle terminal. The car washer, the server, and the vehicle terminal may transmit and receive data over wireless communication connections such as 5G networks, 4G networks, Wireless Local Area Networks (WLAN), Wide-Area Networks (WAN) or Bluetooth connections. The server may include a car washing server in the backend of a car washer, an intelligent car washing cloud server for an intelligent car washing platform, a message center for issuing messages to the vehicle terminal, and the like. The present invention is not limited to any particular types of servers.

### Embodiment 1

FIG. 2 is a flow chart illustrating a method of assisted parking based on a service facility according to an embodiment of the present invention. As shown in FIG. 2, the method of assisted parking based on a service facility may include the following steps:
201. A car washer detects, by its position detection devices, whether the vehicle is parked within a car washing area predetermined by a car washer, and, if so, executes step 202, and if not, executes step 203.

In the embodiment, the service facility is a car washer. Accordingly, the service area is a car washing area in the car washer. The car washing area may be a work area designated inside the car washer. Tools for car washing (such as water sprays, foam nozzles, brushes, dryers, etc.) are all arranged towards the work area. Understandably, in possible embodiments where the service facility is a charging pile, the service area may be a parking area near the charging pile, such that the charging robot arm of the charging pile may be connected to the charging port of a vehicle when the vehicle is parked within the parking area. If the service facility is an automated parking machine, the service area may be a parking slot within the parking machine. The present invention is not limited to any particular scenarios of applications.

When the service facility is a car washer, position detection devices may be disposed within the car washing area or within a certain distance range around the car washing area. If the position detection devices detect the vehicle, the vehicle may be considered to have been parked within the car washing area. Specifically, in the embodiment, the position detection devices may be infrared sensor devices, whereby a vehicle may be considered to have been detected when the infrared sensor devices detect an obstacle. In another alternative embodiment, the position detection devices may be ground sensing devices, whereby a vehicle may be considered to have been detected when the ground sensing devices detect a pressure change or a change of oscillation frequency.

202. The car washer starts car washing service for the vehicle.

In the embodiment of the present invention, when the vehicle is parked within the car washing area, operation ranges of the car washing tools may completely cover the whole vehicle. Thus, a good car washing result can be guaranteed by starting car washing after detecting that the vehicle is parked within the car washing area. Further, in the embodiment of the present invention, the car washer may start the car washing service immediately after detecting that the vehicle is parked within the car washing area. Alternatively, the car washer may send a vehicle parking success message to the server after detecting that the vehicle has been parked in the car washing area. The server can then perform operations such as dispatching car washing service packages, processing payment of car washing fees without a password, vehicle safety inspection, etc., before commencing car washing service by the car washer. The present invention is not limited either way.

203. The car washer causes a vehicle terminal to display driving assistance information for guiding the vehicle into the car washing area.

In the embodiment of the invention, the driving assistance information may be indication information recommending maneuvers such as turning, driving forward, reversing, etc. by way of one or more forms of output such as audio, text, icons, etc. The driving assistance information may also include surround view images of the vehicle captured by cameras. The invention is not limited to any particular form of driving assistance information. Content of the driving assistance information may be determined based the current parking status of the vehicle detected by the position detection device. For example, if the position detection devices detect that the vehicle is still distant from the parking area, the content of the driving assistance information may be to direct the vehicle to move forward; and if the position detection devices detect that the vehicle has passed the parking area, then the content of the driving assistance information may be to direct the vehicle to reverse.

Compared to parking assistance by way of instructions given by staff at the service facility, using a vehicle terminal to display driving assistance information allows a user sitting in a vehicle to directly and clearly acquire guiding instructions, thereby avoiding the need to listen to instructions given by staff at the service facility while observing the environment around the vehicle.

In the method shown in FIG. 2, the car washer may detect, via the position detection devices, whether the vehicle is parked within the car washing area. When the vehicle is not parked within the car washing area, the vehicle terminal is caused to display driving assistance information for guiding the vehicle to park into the car washing area. Therefore, the vehicle's parking condition may be automatically detected by the car washer, thereby avoiding human errors. Additionally, by displaying driving assistance information via the vehicle terminal, a user can clearly acquire guiding instructions in the vehicle, so that parking guidance may be performed automatically without human intervention, which improves efficiency of vehicles parking into the car washer.

### Embodiment 2

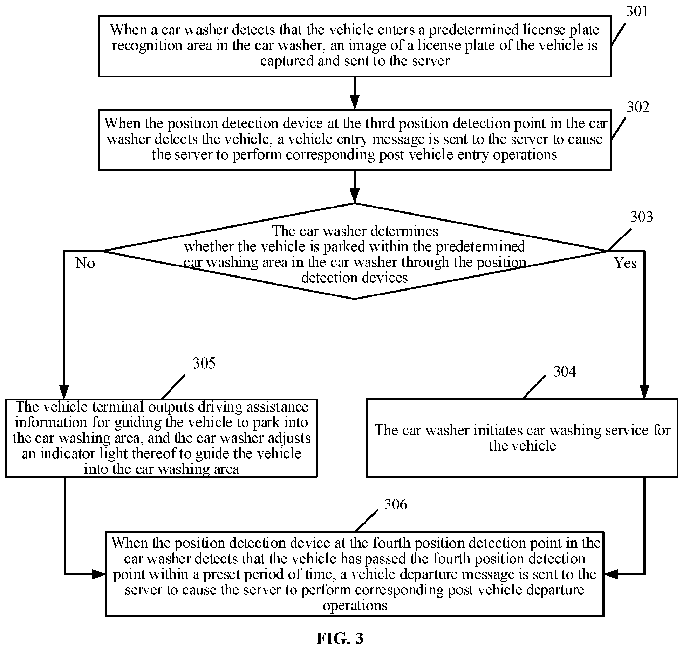

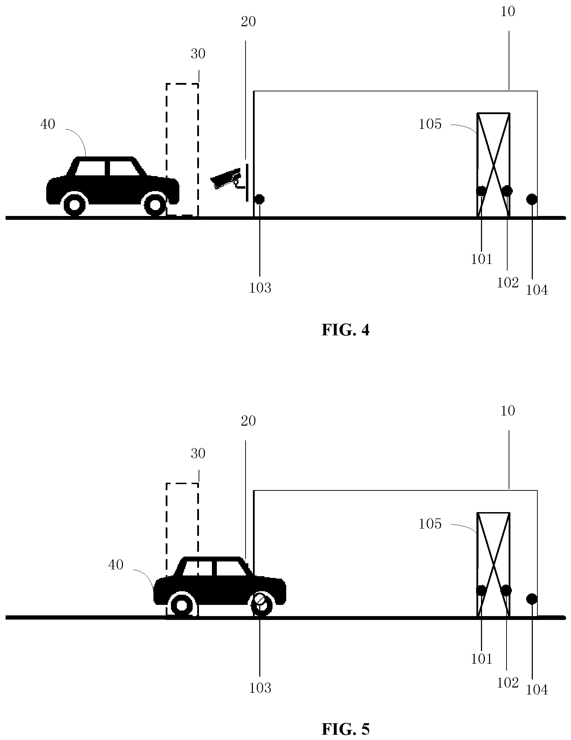

FIG. 3 is a flowchart illustrating another method of assisted parking based on a service facility according to an embodiment of the present invention. To facilitate understanding of the service facility based method of assisted parking shown in FIG. 3, FIG. 4 needs to be studied together. FIG. 4 shows an exemplary scenario of license plate recognition before a vehicle enters a car washer according to an embodiment of the present invention. As shown in FIG. 4, the interior of the housing 10 of the car washer may be provided with a car washing area 105. Position detection devices may be installed at a first position detection point 101, a second position detection point 102, a third position detection point 103, and a fourth position detection point 104. The first position detection point 101 may be located at a side of the car washing area that is nearest to the entrance of the car washer, the second position detection point 102 may be located at a side of the car washing area that is nearest to the exit of the car washer, the third position detection point 103 may be at the entrance of the car washer, and the fourth position detection point 104 may be the exit of the car washer. Note that FIG. 4 shows a cutaway view of the interior of the car washer. The first position detection point 101, the second position detection point 102, the third position detection point 103, and the fourth position detection point 104 may be provided with only one position detection device at each point. It is also possible that multiple (e.g., 2) position detection devices are installed at corresponding positions along a horizontal line at each of the position detection points. The disclosure is not limited to any specific number of position detection devices. Further, at the entrance of the car washer, a camera 20 may be provided for capturing images of license plates of vehicles. Accordingly, an area in front of the camera 20 may be designated as a license plate recognition area 30, wherein when the head of a vehicle 40 enters the license plate recognition area 30, images of the entire license plate can be captured by the camera 20. Further, the car washer may also be equipped with indicator lights (not shown in FIG. 4).

As shown in FIG. 3, the service facility based method of assisted parking may include the steps set out below.

301. When the car washer detects that the vehicle enters a predetermined license plate recognition area in the car washer, an image of a license plate of the vehicle is captured and sent to the server.

In this embodiment, as shown in FIG. 4, when the vehicle, and in particular the head of the vehicle, enters the license plate recognition area, the camera can capture images of the license plate; the server, after receiving the images of the license plate sent by the car washer, can acquire a user account number corresponding to the vehicle based on the images of the license plate and identify the vehicle terminal based on the user account number; at the same time, the car washer can also send surround view images captured around the vehicle to the server, which then sends the surround view images to the vehicle terminal for display. In this implementation, the vehicle terminal may facilitate the user to view the environment around the vehicle by displaying the surround view images, thereby assisting the user to park the vehicle in the car washing area.

302. When the position detection device at the third position detection point in the car washer detects the vehicle, a vehicle entry message is sent to the server to cause the server to perform corresponding post vehicle entry operations.

Referring to FIG. 5, if the position detection device at the third position detection point 103 detects the vehicle 40, it may be determined that the vehicle has entered the car washer (i.e., vehicle entry), so the car washer can report vehicle entry to the server. The respective operations that the server performs after vehicle entry include, among other things: sending a service authorization message to the vehicle terminal to cause the vehicle terminal to display a car washing page according to the service authorization message, to allow the user to authorize car washing service on the car washing page; when it is detected that car washing service has been authorized and that the vehicle has been parked within the car washing area, causing the vehicle terminal to inspect whether the hardware devices of the vehicle are in a ready-for-car-washing state; dispatching car washing service packages to the vehicle terminal, creating a car washing order, fee collection against the car washing order, etc. The present invention is not limited to any particular post vehicle entry operations.

303. The car washer determines whether the vehicle is parked within the predetermined car washing area in the car washer through the position detection devices at the first position detection point and the second position detection point and, if yes, executes step 304, and if not, executes step 305.

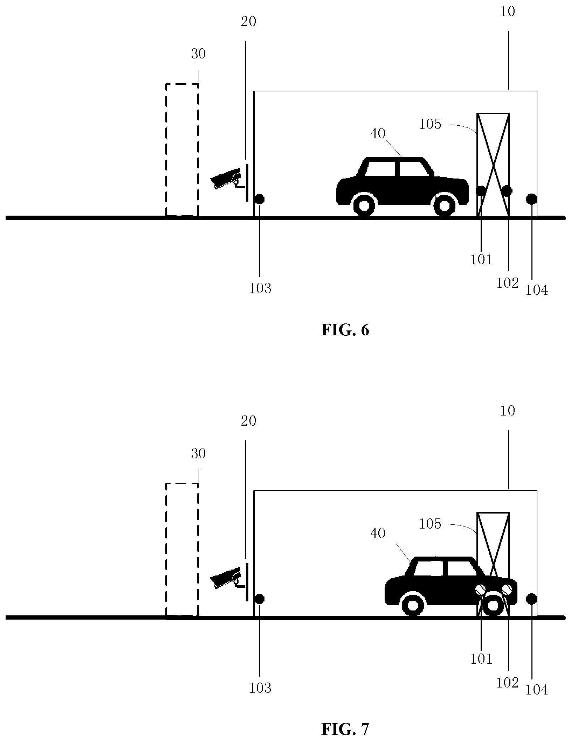

Referring to FIGS. 6-8, step 301 may include the sub-steps set out below.

As shown in FIG. 6, if neither the position detection device at the first position detection point 101 nor the position detection device at the second position detection point 102 detects the vehicle 40, then it is determined that the vehicle 40 is not parked within the car washing area 105 of the car washer.

As shown in FIG. 7, if both the position detection device at the first position detection point 101 and the position detection device at the second position detection point 102 detect the vehicle 40, it is determined that the vehicle 40 is not parked within the car washing area 105 of the car washer.

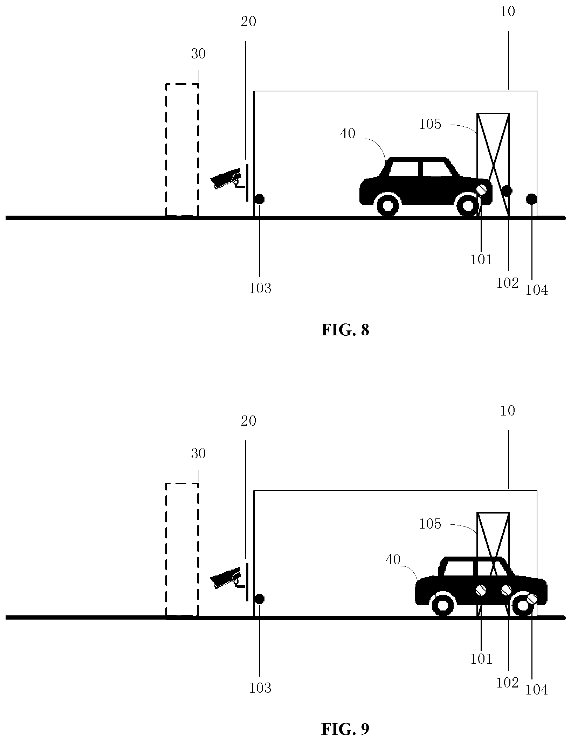

As shown in FIG. 8, if the position detection device at the first position detection point 101 detects the vehicle 40 and the position detection device at the second position detection point 102 does not detect the vehicle 40, it is determined that the vehicle 40 is parked within the car washing area 105 of the car washer.

304. The car washer activates car washing service for the vehicle.

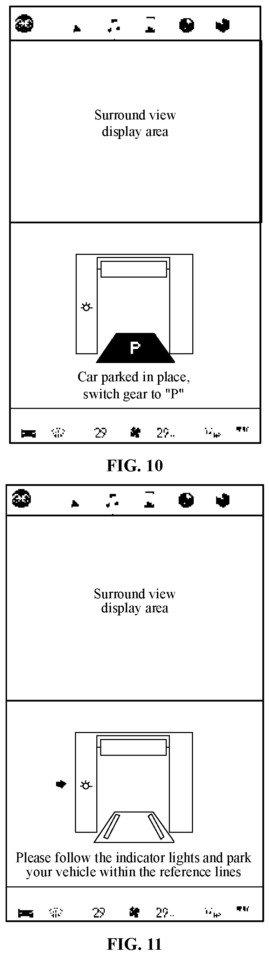

In the embodiment of the present invention, after execution of step 303 and the car washer detects that the vehicle is parked within the car washing area, the following operations may be performed in addition to step 304 described above:
causing the vehicle terminal to output a parking reminder message for prompting transition of the vehicle to a parking state, wherein the parking state may include transmission gear shifted to "P" and/or hand brake deployed. FIG. 10 is an example diagram of a display interface of a vehicle terminal outputting a parking reminder message in accordance with an embodiment of the present invention. As shown in FIG. 10, the upper half of the display, i.e., "surround view display area" may display surround view images captured by panoramic cameras of the display vehicle, and the lower half of the display may remind the user to shift the transmission gear to park ("P") using text and icons.

In addition, the following operation may also be performed:
adjusting an indicator light of the car washer to a third state (e.g., a red "STOP") to direct the vehicle to enter a parking state.

By performing the operations described above, the user may be reminded to park the vehicle properly prior to car wash, to turn off the vehicle's power system so as to avoid accidental start of the power system during car wash, thereby improving safety of the car washing service.

305. The vehicle terminal outputs driving assistance information for guiding the vehicle to park into the car washing area, and the car washer adjusts an indicator light thereof to guide the vehicle into the car washing area.

In the embodiment of the present invention, when the car washer detects that the vehicle is not parked within the car washing area at step 303, it may trigger the vehicle terminal to output the driving assistance information.

As shown in FIG. 6, if neither the position detection device at the first position detection point 101 nor the position detection device at the second position detection point 102 detects the vehicle 40, it may be determined that the vehicle has not reached the car washing area, and the vehicle terminal may specifically output first indication information to direct the vehicle to move forward.

As shown in FIG. 7, if both the position detection device at the first position detection point 101 and the position detection device at the second position detection point 102 detect the vehicle 40, it may be determined that the vehicle has passed the car washing area, and the vehicle terminal may specifically output second indication information to direct the vehicle to reverse.

Further, the user may be directed to park the vehicle into the car washing area via the driving assistance information output by the vehicle terminal and the indicator lights of the car washer. In particular, the steps set out below may be performed.

If neither the position detection device at the first position detection point nor the position detection device at the second position detection point detects the vehicle, an indicator light of the car washer is adjusted to a first state (e.g., a green forward arrow) to direct the vehicle to move forward;

If both the position detection device at the first position detection point and the position detection device at the second position detection point detect the vehicle, an indicator light of the car washer is adjusted to a second state (e.g., a red "REVERSE") to direct the vehicle to reverse.

FIG. 11 shows an exemplary display interface diagram of a vehicle terminal outputting driving assistance information according to an embodiment of the present invention. As shown in FIG. 11, the upper half of the display, i.e., "surround view display area" may display surround view images captured by panoramic cameras of the display vehicle, and the lower half of the display may remind the user to park the vehicle within reference lines using text and remind the user to pay attention to the indicator lights of the car washer using icons such as arrows.

In summary, performance of step 305 may provide the user, through the vehicle terminal and the indicator lights, with guidance instructions corresponding to the vehicle's current parking state, thereby helping the user to quickly park the vehicle into the car washing area.

306. When the position detection device at the fourth position detection point in the car washer detects that the vehicle has passed the fourth position detection point within a preset period of time, a vehicle departure message is sent to the server to cause the server to perform corresponding post vehicle departure operations.

Referring to FIG. 9, according to an embodiment of the present invention, if the position detection device at the fourth position detection point 104 detects an obstacle and subsequently detects that the obstacle disappears (e.g., within the preset period of time as described above), the vehicle 40 may be deemed to have passed the fourth position detection point within a preset period of time. The preset period of time may be calculated in real time based on the vehicle model and the current vehicle speed. In particular, the preset period of time may be calculated as the time between a first time point when the head of the vehicle passes the fourth position detection point and a second time point when the tail of the vehicle passes the fourth position detection point as the vehicle travels at the current vehicle speed.

Furthermore, in some possible embodiments, the car washing area may be located near the exit of the car washer (as in the arrangement shown in FIG. 9). In order to reduce the likelihood of incorrectly determining that the vehicle has left the car washer while the vehicle has just passed the car washing area, after the position detection device at the fourth position detection point in the car washer detects that the vehicle has passed the fourth position detection point within a preset period of time, the position detection device at the first position detection point may also perform detection of the vehicle. If the position detection device at the first position detection point does not detect the vehicle, the operation of sending the vehicle departure message to the server is performed.

Further, operations performed by the server after vehicle departure may include, among other things, the following operations: updating the car washing order corresponding to the car washing service, recording the departure time of the vehicle, and the like.

In the method illustrated by FIG. 3, the car washer may use cameras to capture images of the license plate before the vehicle enters the car washer. It is also possible to detect, by position detection devices arranged at different locations, vehicle entry, whether the vehicle is parked within the car washing area, and vehicle departure, so as to accurately detect the parking status of the vehicle, and to provide different driving assistance information for the user based on the parking status. Furthermore, user experience may be improved by simple and clear provision of indication information through the combination of the vehicle terminal and indicator lights of the car washer.

### Embodiment 3

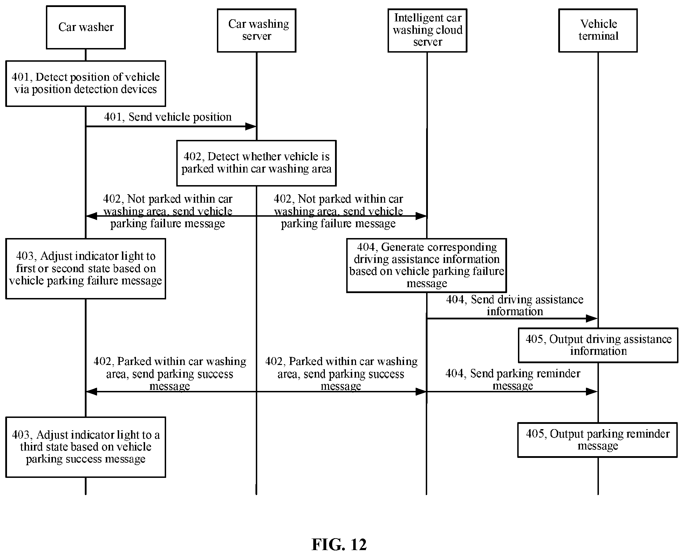

Reference is made to FIG. 12, which is a flow chart illustrating another method of assisted parking based on a service facility according to an embodiment of the present invention. As shown in FIG. 12, the service facility based method of assisted parking may include the steps set out below.

401. The car washer detects the position of the vehicle via the position detection devices and sends position information to the car washing server.

In this embodiment, the car washer may detect the position of the vehicle by position detection devices arranged at the first position detection point, the second position detection point, the third position detection point, and the fourth position detection point.

The first position detection point may be located at a side of the car washing area nearest to an entrance of the car washer, the second position detection point may be located at a side of the car washing area nearest to an exit of the car washer, the third position detection point may be at the entrance of the car washer, and the fourth position detection point may be at the exit of the car washer.

402. The car washing server detects whether the vehicle is parked within the car washing area based on the vehicle position sent by the car washer and, if so, sends a parking success message to the car washer and the intelligent car washing cloud server, and if not, sends a vehicle parking failure message to the car washer and the intelligent car washing cloud server.

403. The car washer adjusts an indicator light to a first state or a second state based on the vehicle parking failure message; alternatively, the car washer adjusts an indicator light to a third state based on the parking success message.

In the embodiment of the present invention, the first state is used to direct the vehicle to move forward; the second state is used to direct the vehicle to reverse; and the third state is used to direct the vehicle to enter a parking state.

If the vehicle parking failure message indicates that neither the position detection device at the first position detection point nor the position detection device at the second position detection point detects the vehicle, an indicator light of the car washer is adjusted to the first state for directing the vehicle to move forward.

If the vehicle parking failure message indicates that both the position detection device at the first position detection point and the position detection device at the second position detection point detect the vehicle, an indicator light of the car washer is adjusted to the second state for directing the vehicle to reverse.

404. The intelligent car washing cloud server generates corresponding driving assistance information based on the vehicle parking failure message and sends the driving assistance information to the vehicle terminal; alternatively, the intelligent car washing cloud server sends a parking reminder message to the vehicle terminal based on the parking success message.

In the embodiment of the present invention, if the vehicle parking failure message indicates that neither the position detection device at the first position detection point nor the position detection device at the second position detection point detects the vehicle, the driving assistance information generated by the intelligent car washing cloud server may specifically include the first indication information for directing the vehicle to move forward.

If the vehicle parking failure message indicates that both the position detection device at the first position detection point and the position detection device at the second position detection point detect the vehicle, the driving assistance information generated by the intelligent car washing cloud server may specifically include the second indication information for directing the vehicle to reverse.

405. The vehicle terminal outputs the driving assistance information when the vehicle is not parked within the car washing area and outputs the parking reminder message when the vehicle is parked within the car washing area.

In the method illustrated in FIG. 12, automatic guidance for parking a vehicle into the car washer may be achieved though information exchange between the car washer, the car washing server in the backend of the car washer, the intelligent car washing cloud server of the intelligent car washing platform, and the vehicle terminal, thereby improving efficiency of vehicle parking, and providing good user interaction experience.

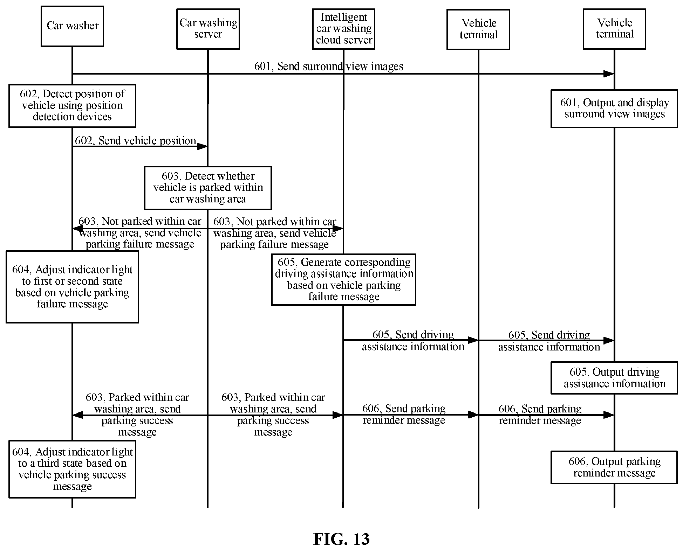

Further reference is made to FIG. 13, which is a flow chart illustrating yet another method of assisted parking based on a service facility according to an embodiment of the present invention. As shown in FIG. 13, the method of assisted parking based on a service facility may include the steps set out below.

601. The car washer sends captured surround view images of the vehicle to the car washing server, which in turn sends the surround view images to the intelligent car washing cloud server; and the surround view images are then sent to a vehicle terminal via a message center for output and display.

Steps 602~604 are identical to steps 401~403 described above and are not repeated herein.

605. The intelligent car washing cloud server generates corresponding driving assistance information based on the vehicle parking failure message and pushes the driving assistance information to the message center which sends the information to the vehicle terminal.

606. The intelligent car washing cloud server pushes a parking reminder message to the message center based on the vehicle parking success message, and the message center sends the parking reminder message to the vehicle terminal.

### Embodiment 4

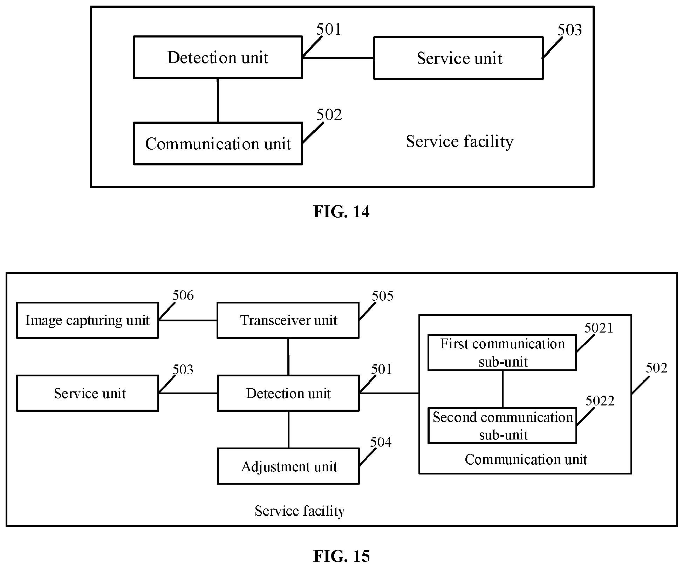

Reference is made to FIG. 14, which is a schematic structural diagram of a service facility according to an embodiment of the present invention. As shown in FIG. 14, the service facility may include several units as discussed below.

A detection unit 501 is configured to detect, by position detection devices of the service facility, whether a vehicle is parked within a service area predetermined by the service facility.

In the embodiment of the present invention, the position detection devices may be arranged within the car washing area or within a distance range from the car washing area. If the position detection devices detect the vehicle, the detection unit 501 may determine that the vehicle is parked within the car washing area.

A communication unit 502 is configured to cause a vehicle terminal to output and display driving assistance information for guiding the vehicle to park into the car washing area when the detection unit 501 detects that the vehicle is not parked within the car washing area. In the embodiment of the invention, the communication unit 502 may output indication information recommending maneuvers such as turning, driving forward, reversing, etc. by way of one or more forms of output such as audio, text, icons, etc. The driving assistance information may also include surround view images of the vehicle captured by cameras. The invention is not limited to any particular form of driving assistance information. If the position detection devices detect that the vehicle is still distant from the parking area, the content of the driving assistance information output by the communication unit 502 may be to direct the vehicle to move forward; if the position detection devices detect that the vehicle has passed the parking area, then the content of the driving assistance information output by the communication unit 502 may be to direct the vehicle to reverse.

A service unit 503 is configured to activate car washing service for the vehicle when the detection unit 501 detects that the vehicle is parked within the car washing area.

The service facility shown in FIG. 14 may detect, via the position detection devices, whether the vehicle is parked within the car washing area. When the vehicle is not parked within the car washing area, the vehicle terminal is caused to display driving assistance information for guiding the vehicle to park into the car washing area. Therefore, the vehicle's parking condition may be automatically detected by the service facility, thereby avoiding human errors and improving efficiency of vehicle parking in the service area.

### Embodiment 5

Reference is made to FIG. 15, which is a schematic structural diagram illustrating another service facility according to an embodiment of the present invention. The service facility shown in FIG. 15 is optimized based on the service facility shown in FIG. 14. In contrast to the service facility shown in FIG. 14, in the service facility shown in FIG. 15, each of the first position detection point, the second position detection point, the third position detection point, and the fourth position detection point may be provided with a position detection device.

For example, when the service facility is a car washer, the first position detection point may be located at a side of the car washing area nearest to an entrance of the car washer, the second position detection point may be located at a side of the car washing area nearest to an exit of the car washer, the third position detection point may be located at the entrance of the car washer, and the fourth position detection point may be located at the exit of the car washer.

Accordingly, the detection unit 501 may be configured to:
determine that the vehicle is not parked within a predetermined service area in the service facility when neither the position detection device at the first position detection point nor the position detection device at the second position detection point detects the vehicle;
determine that the vehicle is not parked within the predetermined service area in the service facility when both the position detection device at the first position detection point and the position detection device at the second position detection point detect the vehicle; and
determine that the vehicle is parked within the predetermined service area in the service facility when the position detection device at the first position detection point detects the vehicle and the position detection device at the second position detection point does not detect the vehicle.

The communication unit 502 described above may include:
a first communication sub-unit 5021, for causing the vehicle terminal to output first indication information for directing the vehicle to move forward when the detection unit 501 determines that neither the position detection device at the first position detection point nor the position detection device at the second position detection point detects the vehicle;
a second communication sub-unit 5021, for causing the vehicle terminal to output second indication information for directing the vehicle to reverse when the detection unit 501 determines that both the position detection device at the first position detection point and the position detection device at the second position detection point detect the vehicle.

Optionally, the service facility shown in FIG. 15 may also include the following element:
an adjustment unit 504 configured to:
adjust an indicator light of the service facility to a first state for directing the vehicle to move forward when the detection unit 501 determines that neither the position detection device at the first position detection point nor the position detection device at the second position detection point detects the vehicle;
adjust an indicator light of the service facility to a second state for directing the vehicle to reverse when the detection unit 501 determines that both the position detection device at the first position detection point and the position detection device at the second position detection point detect the vehicle; and
adjust an indicator light of the service facility to a third state for directing the vehicle to enter a parking state when the detection unit 501 determines that the position detection device at the first position detection point detects the vehicle and the position detection device at the second position detection point does not detect the vehicle.

Optionally, in the service facility shown in FIG. 15, detection unit 501 may also be used for determining whether the position detection device at the third position detection point detects the vehicle and determining whether the position detection device at the fourth position detection point detects that the vehicle passes the fourth position detection point within a preset period of time.

Accordingly, the service facility shown in FIG. 15 may additionally include the following element:
a transceiver unit 505, configured to send a vehicle entry message to a server to cause the server to perform corresponding post-entry operations when the detection unit 501 determines that the position detection device at the third position detection point detects the vehicle, and to send a vehicle departure message to the server to cause the server to perform corresponding post-departure operations when the detection unit 501 determines that the position detection device at the fourth position detection point detects that the vehicle passes the fourth position detection point within a preset period of time.

As an alternative embodiment, in order to reduce the likelihood of incorrectly determining that the vehicle has left the car washer while the vehicle has just passed the car washing area, after the detection unit 501 determines that the position detection device at the fourth position detection point in the car washer detects the vehicle has passed the fourth position detection point within a preset period of time, the detection unit 501 may additionally determine whether the position detection device at the first position detection point detects the vehicle. If the position detection device at the first position detection point does not detect the vehicle, the transceiver unit 505 then sends the vehicle departure message to the server.

The service facility shown in FIG. 15 may further include the following element:
an image capturing unit 506 configured to control a camera to capture an image of a license plate of the vehicle when detecting entry of the vehicle into a predetermined license plate recognition area in the service facility and to capture surround view images of the vehicle.

The transceiver unit 505 described above is further configured to send the image of the license plate to the server, thereby causing the server to acquire a user account number corresponding to the vehicle based on the image of the license plate and to identify the vehicle terminal based on the user account number, and to send the surround view images to the server which then sends the surround view images to the vehicle terminal for output and display.

The service facility shown in FIG. 15 can be used to capture images of the license plate of a vehicle by cameras before the vehicle enters the service facility, to detect vehicle entry, vehicle parking in a car washing area, and vehicle departure using position detection devices disposed at different locations, and to output guidance instructions through the vehicle terminal and indicator lights of the service facility when the vehicle is not parked within the car washing area, such that it can accurately detect parking status of vehicles and provide users with different driving assistance information based on different parking status of the vehicles. Furthermore, the combination of the vehicle terminal and indicator lights on the service facility enables simple and clear provision of indication information and provides good user interaction experience.

There is further provided another service facility, which comprises:
a memory device storing executable program code; and
a processor coupled to the memory device, wherein
the processor is operable to execute the program code stored in the memory device to perform any one of the methods of assisted parking based on a service facility as illustrated by FIG. 2 and FIG. 3.

There is further provided a computer-readable storage medium, which stores a computer program, execution of which causes a computer to perform any one of the methods of assisted parking based on a service facility as illustrated by FIG. 2 and FIG. 3.

There is further provided a computer program product that includes a non-transitory computer-readable storage medium storing a computer program which is operable to cause a computer to perform any one of the methods assisted parking based on a service facility as illustrated by FIG. 2 and FIG. 3.

It should be understood that references throughout the specification to "one embodiment" or "an embodiment" mean that a particular feature, structure, or characteristic described in connection with the embodiment is included in at least one embodiment of the present invention. Thus, the phrases "in one embodiment" or "in an embodiment" used in various passages throughout this specification are not necessarily all referring to the same embodiment.

In various embodiments of the present invention, it should be understood that the order of the sequence numbers of the processes described above is not meant to imply the necessary ordering in which the processes are performed. Rather the ordering of the processes should be determined by their functions and inherent logics. The order of the sequence numbers should not be construed as any limitation on the scope of the embodiments of the present invention.

The units described above as separate components may or may not be physically separate, components illustrated as units may or may not be physical units, and they be present in one place or distributed across multiple network units. Some or all of the units may be selected in accordance with actual needs in order to achieve the purpose of the embodiments of the disclosure.

Furthermore, the various functional units may be integrated in one processing unit, or may physically exist as separate units, or two or more units may be integrated in one unit. The aforementioned integrated units may be implemented in the form of hardware or software functional units.

The aforementioned integrated units may be stored in a computer accessible memory when implemented in the form of a software functional units and sold or used as a standalone product. Based on such understanding, the technical solution of the present invention in essence, or all or part of the technical solution that contributes to the state of the art, may be embodied in the form of a software product. The software product may be stored on a memory device and includes a number of instructions to cause a computer device (which may be a personal computer, server, or network device, or the like, particularly a processor in a computer device) to perform some or all of the steps of the methods of the various embodiments of the invention as described above.

Those of ordinary skills in the art will appreciate that all or some of the steps of the various methods of the embodiments described above may be accomplished by relevant hardware under instructions of a computer program. The computer program may be stored in a computer-readable storage medium such as read-only memory (ROM), random-access memory (RAM), programmable read-only memory (PROM), erasable programmable read-only memory (EPROM), one-time programmable read-only memory (OTPROM), electrically erasable programmable read-only memory (EEPROM), compact-disc read-only memory (CD-ROM) or other optical disk storage device, magnetic disk storage device, magnetic tape storage device, or any other medium that can be used to carry or store data.

The present invention has been described in detail with respect to a method of assisted parking based on a service facility and such a service facility. While specific examples have been described herein to illustrate the principles and embodiments of the invention, the description of the examples is provided solely to facilitate understanding of the principles of the invention and its core concept. It will be apparent to those skilled in the art that various changes may be made to the specific embodiments and applications based on the principle of the present invention, and that the present specification should not be construed as limiting the invention as defined by the appended claims.

## Claims

1. A method of assisted parking based on a service facility, **characterized by**:
detecting, by position detection devices of the service facility, whether a vehicle is parked within a predetermined service area; and
if the vehicle is not parked within the predetermined service area, causing a vehicle terminal to display driving assistance information for guiding the vehicle to park within the predetermined service area,
wherein the position detection devices are provided at a first position detection point and a second position detection point in the service facility, **characterised in that**:
the first position detection point is located at a side of the predetermined service area that is nearest to an entrance of the service facility, and wherein the second position detection point is located at a side of the predetermined service area that is nearest to an exit of the service facility,
wherein said detecting, by the position detection devices of the service facility, whether the vehicle is parked within the predetermined service area comprises:
if neither the position detection device at the first position detection point nor the position detection device at the second position detection point detects the vehicle, determining that the vehicle is not parked within the predetermined service area;
if both the position detection device at the first position detection point and the position detection device at the second position detection point detect the vehicle, determining that the vehicle is not parked within the predetermined service area; and
if the position detection device at the first position detection point detects the vehicle and the position detection device at the second position detection point does not detect the vehicle, determining that the vehicle is parked within the predetermined service area, and wherein the method further comprises:
if the vehicle is parked within the predetermined service area, activating a service operation for the vehicle.

2. The method of claim 1, wherein said causing a vehicle terminal to display driving assistance information for guiding the vehicle to park within the predetermined service area comprises:
if neither the position detection device at the first position detection point nor the position detection device at the second position detection point detects the vehicle, causing the vehicle terminal to output first indication information to direct the vehicle to move forward; and
if both the position detection device at the first position detection point and the position detection device at the second position detection point detect the vehicle, causing the vehicle terminal to output second indication information to direct the vehicle to reverse.

3. The method of claim 1 or 2, further comprising:
if neither the position detection device at the first position detection point nor the position detection device at the second position detection point detects the vehicle, adjusting an indicator light of the service facility to a first state for directing the vehicle to move forward;
if both the position detection device at the first position detection point and the position detection device at the second position detection point detect the vehicle, adjusting an indicator light of the service facility to a second state for directing the vehicle to reverse; and
if the position detection device at the first position detection point detects the vehicle and the position detection device at the second position detection point does not detect the vehicle, adjusting an indicator light of the service facility to a third state for directing the vehicle to enter a parking state.

4. The method of any one of claims 1 to 3, wherein the position detection devices are provided at a third position detection point and a fourth position detection point in the service facility, the method further comprising:
if the position detection device at the third position detection point detects the vehicle, sending a vehicle entry message to a server to cause the server to perform corresponding post-entry operations; and
if the position detection device at the fourth position detection point detects that the vehicle passes the fourth position detection point within a preset period of time, sending a vehicle departure message to the server to cause the server to perform corresponding post-departure operations.

5. The method of claim 4, further comprising:
upon detecting entry of the vehicle into a predetermined license plate recognition area in the service facility, capturing an image of a license plate of the vehicle and sending the image to the server, thereby causing the server to acquire a user account number corresponding to the vehicle based on the image of the license plate and identifying the vehicle terminal based on the user account number; and
sending, to the server, captured surround view images of the vehicle, and sending, by the server, the surround view images to the vehicle terminal for output and display.

6. The method of any one of claims 1 to 3, further comprising:
upon detecting entry of the vehicle into a predetermined license plate recognition area in the service facility, capturing an image of a license plate of the vehicle and sending the image to a server, thereby causing the server to acquire a user account number corresponding to the vehicle based on the image of the license plate and identifying the vehicle terminal based on the user account number.

7. The method of claim 6, further comprising:
sending, to the server, captured surround view images of the vehicle, and sending, by the server, the surround view images to the vehicle terminal for output and display.

8. A service facility, **characterized by**:
a detection unit configured to detect, by position detection devices of the service facility, whether a vehicle is parked within a predetermined service area;
a communication unit configured to cause a vehicle terminal to display driving assistance information for guiding the vehicle to park within the predetermined service area when the detection unit detects that the vehicle is not parked within the predetermined service area; and
a service unit configured to activate a service operation for the vehicle when the detection unit detects that the vehicle is parked within the predetermined service area,
wherein the position detection devices are arranged at a first position detection point and a second position detection point in the service facility, **characterised in that**:
the first position detection point is located at a side of the predetermined service area that is nearest to an entrance of the service facility, and wherein the second position detection point is located at a side of the predetermined service area that is nearest to an exit of the service facility;
and wherein the detection unit is configured to:
determine that the vehicle is not parked within the predetermined service area if neither the position detection device at the first position detection point nor the position detection device at the second position detection point detects the vehicle;
determine that the vehicle is not parked within the predetermined service area if both the position detection device at the first position detection point and the position detection device at the second position detection point detect the vehicle; and
determine that the vehicle is parked within the predetermined service area if the position detection device at the first position detection point detects the vehicle and the position detection device at the second position detection point does not detect the vehicle.

9. The service facility of claim 8, wherein the communication unit comprises:
a first communication sub-unit configured to cause the vehicle terminal to output first indication information for directing the vehicle to move forward when neither the position detection device at the first position detection point nor the position detection device at the second position detection point detects the vehicle; and
a second communication sub-unit configured to cause the vehicle terminal to output second indication information for directing the vehicle to reverse when both the position detection device at the first position detection point and the position detection device at the second position detection point detect the vehicle.

10. The service facility of claim 8 or 9, further comprising an adjustment unit configured to:
adjust an indicator light of the service facility to a first state for directing the vehicle to move forward when neither the position detection device at the first position detection point nor the position detection device at the second position detection point detects the vehicle;
adjust an indicator light of the service facility to a second state for directing the vehicle to reverse when both the position detection device at the first position detection point and the position detection device at the second position detection point detect the vehicle; and
adjust an indicator light of the service facility to a third state for directing the vehicle to enter a parking state when the position detection device at the first position detection point detects the vehicle and the position detection device at the second position detection point does not detect the vehicle.

## Patentansprüche

1. Verfahren zum unterstützten Parken auf der Basis einer Serviceeinrichtung, **gekennzeichnet durch**:
Erfassen, durch Positionserfassungsvorrichtungen der Serviceeinrichtung, ob ein Fahrzeug innerhalb eines vorbestimmten Servicebereichs geparkt ist; und
Veranlassen, wenn das Fahrzeug nicht innerhalb des vorbestimmten Servicebereichs geparkt ist, dass ein Fahrzeugterminal Fahrunterstützungsinformationen zum Führen des Fahrzeugs zum Parken innerhalb des vorbestimmten Servicebereichs anzeigt,
wobei die Positionserfassungsvorrichtungen an einem ersten Positionserfassungspunkt und einem zweiten Positionserfassungspunkt in der Serviceeinrichtung vorgesehen sind, **dadurch gekennzeichnet, dass**:
der erste Positionserfassungspunkt sich auf einer Seite des vorbestimmten Servicebereichs befindet, die einem Eingang der Serviceeinrichtung am nächsten liegt, und wobei sich der zweite Positionserfassungspunkt auf einer Seite des vorbestimmten Servicebereichs befindet, die einem Ausgang der Serviceeinrichtung am nächsten liegt,
wobei das genannte Erfassen, durch die Positionserfassungsvorrichtungen der Serviceeinrichtung, ob das Fahrzeug innerhalb des vorbestimmten Servicebereichs geparkt ist, Folgendes beinhaltet:
Feststellen, wenn weder die Positionserfassungsvorrichtung am ersten Positionserfassungspunkt noch die Positionserfassungsvorrichtung am zweiten Positionserfassungspunkt das Fahrzeug erfasst, dass das Fahrzeug nicht innerhalb des vorbestimmten Servicebereichs geparkt ist;
Feststellen, wenn sowohl die Positionserfassungsvorrichtung am ersten Positionserfassungspunkt als auch die Positionserfassungsvorrichtung am zweiten Positionserfassungspunkt das Fahrzeug erfassen, dass das Fahrzeug nicht innerhalb des vorbestimmten Servicebereichs geparkt ist; und
Feststellen, wenn die Positionserfassungsvorrichtung am ersten Positionserfassungspunkt das Fahrzeug erfasst und die Positionserfassungsvorrichtung am zweiten Positionserfassungspunkt das Fahrzeug nicht erfasst, dass das Fahrzeug innerhalb des vorbestimmten Servicebereichs geparkt ist, und wobei das Verfahren ferner Folgendes beinhaltet:
Aktivieren, wenn das Fahrzeug innerhalb des vorbestimmten Servicebereichs geparkt ist, eines Servicevorgangs für das Fahrzeug.

2. Verfahren nach Anspruch 1, wobei das genannte Veranlassen, dass ein Fahrzeugterminal Fahrunterstützungsinformationen zum Führen des Fahrzeugs zum Parken innerhalb des vorbestimmten Servicebereichs anzeigt, Folgendes beinhaltet:
Veranlassen, wenn weder die Positionserfassungsvorrichtung am ersten Positionserfassungspunkt noch die Positionserfassungsvorrichtung am zweiten Positionserfassungspunkt das Fahrzeug erfasst, dass das Fahrzeugterminal erste Anzeigeinformationen ausgibt, um das Fahrzeug zum Vorwärtsfahren anzuweisen; und
Veranlassen, wenn sowohl die Positionserfassungsvorrichtung am ersten Positionserfassungspunkt als auch die Positionserfassungsvorrichtung am zweiten Positionserfassungspunkt das Fahrzeug erfassen, dass das Fahrzeugterminal zweite Anzeigeinformationen ausgibt, um das Fahrzeug zum Rückwärtsfahren anzuweisen.

3. Verfahren nach Anspruch 1 oder 2, das ferner Folgendes beinhaltet:
Justieren, wenn weder die Positionserfassungsvorrichtung am ersten Positionserfassungspunkt noch die Positionserfassungsvorrichtung am zweiten Positionserfassungspunkt das Fahrzeug erfasst, einer Anzeigelampe der Serviceeinrichtung in einen ersten Zustand, um das Fahrzeug zum Vorwärtsfahren anzuweisen;
Justieren, wenn sowohl die Positionserfassungsvorrichtung am ersten Positionserfassungspunkt als auch die Positionserfassungsvorrichtung am zweiten Positionserfassungspunkt das Fahrzeug erfassen, einer Anzeigelampe der Serviceeinrichtung in einen zweiten Zustand, um das Fahrzeug zum Rückwärtsfahren anzuweisen; und
Justieren, wenn die Positionserfassungsvorrichtung am ersten Positionserfassungspunkt das Fahrzeug erfasst und die Positionserfassungsvorrichtung am zweiten Positionserfassungspunkt das Fahrzeug nicht erfasst, einer Anzeigelampe der Serviceeinrichtung in einen dritten Zustand, um das Fahrzeug zum Eintreten in einen Parkzustand anzuweisen.

4. Verfahren nach einem der Ansprüche 1 bis 3, wobei die Positionserfassungsvorrichtungen an einem dritten Positionserfassungspunkt und einem vierten Positionserfassungspunkt in der Serviceeinrichtung vorgesehen sind, wobei das Verfahren ferner Folgendes beinhaltet:
Senden, wenn die Positionserfassungsvorrichtung am dritten Positionserfassungspunkt das Fahrzeug erfasst, einer Fahrzeugeinfahrtsmeldung an einen Server, um den Server zu veranlassen, entsprechende Nacheinfahrtsvorgänge durchzuführen; und
Senden, wenn die Positionserfassungsvorrichtung am vierten Positionserfassungspunkt erfasst, dass das Fahrzeug den vierten Positionserfassungspunkt innerhalb einer voreingestellten Zeitspanne passiert, einer Fahrzeugausfahrtsnachricht an den Server, um den Server zu veranlassen, entsprechende Nachausfahrtsvorgänge auszuführen.

5. Verfahren nach Anspruch 4, das ferner Folgendes beinhaltet:
Aufnehmen, nach dem Erfassen der Einfahrt des Fahrzeugs in einen vorbestimmten Kennzeichenerkennungsbereich in der Serviceeinrichtung, eines Bildes eines Kennzeichens des Fahrzeugs und Senden des Bildes zum Server, wodurch der Server veranlasst wird, eine Benutzerkontonummer entsprechend dem Fahrzeug auf der Basis des Bildes des Kennzeichens zu erhalten und das Fahrzeugterminal auf der Basis der Benutzerkontonummer zu identifizieren; und
Senden, zum Server, von aufgenommenen Umgebungsansichtsbildern des Fahrzeugs und Senden, durch den Server, der Umgebungsansichtsbilder zum Fahrzeugterminal zur Ausgabe und Anzeige.

6. Verfahren nach einem der Ansprüche 1 bis 3, das ferner Folgendes beinhaltet:
Aufnehmen, nach dem Erfassen der Einfahrt des Fahrzeugs in einen vorbestimmten Kennzeichenerkennungsbereich in der Serviceeinrichtung, eines Bildes eines Kennzeichens des Fahrzeugs und Senden des Bildes zu einem Server, wodurch der Server veranlasst wird, eine Benutzerkontonummer entsprechend dem Fahrzeug auf der Basis des Bildes des Kennzeichens zu erhalten und das Fahrzeugterminal auf der Basis der Benutzerkontonummer zu identifizieren.

7. Verfahren nach Anspruch 6, das ferner Folgendes beinhaltet:
Senden, zum Server, von aufgenommenen Umgebungsansichtsbildern des Fahrzeugs, und Senden, durch den Server, der Umgebungsansichtsbilder zum Fahrzeugterminal zur Ausgabe und Anzeige.

8. Serviceeinrichtung, **gekennzeichnet durch**:
eine Erfassungseinheit, konfiguriert zum Erfassen, durch Positionserfassungsvorrichtungen der Serviceeinrichtung, ob ein Fahrzeug innerhalb eines vorbestimmten Servicebereichs geparkt ist;
eine Kommunikationseinheit, konfiguriert zum Veranlassen eines Fahrzeugterminals, Fahrunterstützungsinformationen zum Führen des Fahrzeugs zum Parken innerhalb des vorbestimmten Servicebereichs anzuzeigen, wenn die Erfassungseinheit erfasst, dass das Fahrzeug nicht innerhalb des vorbestimmten Servicebereichs geparkt ist; und
eine Serviceeinheit, konfiguriert zum Aktivieren eines Servicevorgangs für das Fahrzeug, wenn die Erfassungseinheit erfasst, dass das Fahrzeug innerhalb des vorbestimmten Servicebereichs geparkt ist,
wobei die Positionserfassungsvorrichtungen an einem ersten Positionserfassungspunkt und einem zweiten Positionserfassungspunkt in der Serviceeinrichtung angeordnet sind, **dadurch gekennzeichnet, dass**:
der erste Positionserfassungspunkt sich auf einer Seite des vorbestimmten Servicebereichs befindet, die einem Eingang der Serviceeinrichtung am nächsten liegt, und wobei sich der zweite Positionserfassungspunkt auf einer Seite des vorbestimmten Servicebereichs befindet, die einem Ausgang der Serviceeinrichtung am nächsten liegt;
und wobei die Erfassungseinheit konfiguriert ist zum:
Feststellen, dass das Fahrzeug nicht innerhalb des vorbestimmten Servicebereichs geparkt ist, wenn weder die Positionserfassungsvorrichtung am ersten Positionserfassungspunkt noch die Positionserfassungsvorrichtung am zweiten Positionserfassungspunkt das Fahrzeug erfasst;
Feststellen, dass das Fahrzeug nicht innerhalb des vorbestimmten Servicebereichs geparkt ist, wenn sowohl die Positionserfassungsvorrichtung am ersten Positionserfassungspunkt als auch die Positionserfassungsvorrichtung am zweiten Positionserfassungspunkt das Fahrzeug erfassen; und
Feststellen, dass das Fahrzeug innerhalb des vorbestimmten Servicebereichs geparkt ist, wenn die Positionserfassungsvorrichtung am ersten Positionserfassungspunkt das Fahrzeug erfasst und die Positionserfassungsvorrichtung am zweiten Positionserfassungspunkt das Fahrzeug nicht erfasst.

9. Serviceeinrichtung nach Anspruch 8, wobei die Kommunikationseinheit Folgendes umfasst:
eine erste Kommunikationsuntereinheit, konfiguriert zum Veranlassen des Fahrzeugterminals, erste Anzeigeinformationen auszugeben, um das Fahrzeug zum Vorwärtsfahren anzuweisen, wenn weder die Positionserfassungsvorrichtung am ersten Positionserfassungspunkt noch die Positionserfassungsvorrichtung am zweiten Positionserfassungspunkt das Fahrzeug erfasst; und
eine zweite Kommunikationsuntereinheit, konfiguriert zum Veranlassen des Fahrzeugterminals, zweite Anzeigeinformationen auszugeben, um das Fahrzeug zum Rückwärtsfahren anzuweisen, wenn sowohl die Positionserfassungsvorrichtung am ersten Positionserfassungspunkt als auch die Positionserfassungsvorrichtung am zweiten Positionserfassungspunkt das Fahrzeug erfassen.

10. Serviceeinrichtung nach Anspruch 8 oder 9, die ferner eine Justiereinheit umfasst, konfiguriert zum:
Justieren einer Anzeigelampe der Serviceeinrichtung in einen ersten Zustand, um das Fahrzeug zum Vorwärtsfahren anzuweisen, wenn weder die Positionserfassungsvorrichtung am ersten Positionserfassungspunkt noch die Positionserfassungsvorrichtung am zweiten Positionserfassungspunkt das Fahrzeug erfasst;
Justieren einer Anzeigelampe der Serviceeinrichtung in einen zweiten Zustand, um das Fahrzeug zum Rückwärtsfahren anzuweisen, wenn sowohl die Positionserfassungsvorrichtung am ersten Positionserfassungspunkt als auch die Positionserfassungsvorrichtung am zweiten Positionserfassungspunkt das Fahrzeug erfassen; und
Justieren einer Anzeigelampe der Serviceeinrichtung in einen dritten Zustand, um das Fahrzeug zum Eintreten in einen Parkzustand anzuweisen, wenn die Positionserfassungsvorrichtung am ersten Positionserfassungspunkt das Fahrzeug erfasst und die Positionserfassungsvorrichtung am zweiten Positionserfassungspunkt das Fahrzeug nicht erfasst.

## Revendications

1. Procédé de stationnement assisté basé sur une installation de services, **caractérisé par** :
une détection, par des dispositifs de détection de position de l'installation de services, du fait qu'un véhicule est stationné ou non dans une zone de services prédéterminée ; et
si le véhicule n'est pas stationné dans la zone de services prédéterminée, le fait d'amener un terminal de véhicule à afficher des informations d'aide à la conduite pour guider le véhicule pour qu'il stationne dans la zone de services prédéterminée,
dans lequel les dispositifs de détection de position sont fournis au niveau d'un premier point de détection de position et d'un deuxième point de détection de position dans l'installation de services, **caractérisé en ce que** :
le premier point de détection de position est situé au niveau d'un côté de la zone de services prédéterminée qui est le plus près de l'entrée de l'installation de services, et dans lequel le deuxième point de détection de position est situé au niveau d'un côté de la zone de services prédéterminée qui est le plus près d'une sortie de l'installation de services,
dans lequel ladite détection, par les dispositifs de détection de position de l'installation de services, du fait que le véhicule est stationné ou non dans la zone de services prédéterminée comprend :
si ni le dispositif de détection de position au niveau du premier point de détection de position ni le dispositif de détection de position au niveau du deuxième point de détection de position ne détectent le véhicule, une détermination du fait que le véhicule n'est pas stationné dans la zone de services prédéterminée ;
si à la fois le dispositif de détection de position au niveau du premier point de détection de position et le dispositif de détection de position au niveau du deuxième point de détection de position détectent le véhicule, une détermination du fait que le véhicule n'est pas stationné dans la zone de services prédéterminée ; et
si le dispositif de détection de position au niveau du premier point de détection de position détecte le véhicule et le dispositif de détection de position au niveau du deuxième point de détection de position ne détecte pas le véhicule, une détermination du fait que le véhicule est stationné dans la zone de services prédéterminée ; et dans lequel le procédé comprend en outre :
si le véhicule est stationné dans la zone de services prédéterminée, une activation d'une opération de service pour le véhicule.

2. Procédé, selon la revendication 1, dans lequel ledit fait d'amener un terminal de véhicule à afficher des informations d'aide à la conduite pour guider le véhicule pour qu'il stationne dans la zone de services prédéterminée comprend :
si ni le dispositif de détection de position au niveau du premier point de détection de position ni le dispositif de détection de position au niveau du deuxième point de détection de position ne détectent le véhicule, le fait d'amener le terminal de véhicule à émettre en sortie de premières informations d'indication pour ordonner au véhicule de se déplacer vers l'avant ; et
si à la fois le dispositif de détection de position au niveau du premier point de détection de position et le dispositif de détection de position au niveau du deuxième point de détection de position détectent le véhicule, le fait d'amener le terminal de véhicule à émettre en sortie de secondes informations d'indication pour ordonner au véhicule de reculer.

3. Procédé selon la revendication 1 ou 2, comprenant en outre :
si ni le dispositif de détection de position au niveau du premier point de détection de position ni le dispositif de détection de position au niveau du deuxième point de détection de position ne détectent le véhicule, un ajustement d'un témoin lumineux de l'installation de services à un premier état pour ordonner au véhicule de se déplacer vers l'avant ;
si à la fois le dispositif de détection de position au niveau du premier point de détection de position et le dispositif de détection de position au niveau du deuxième point de détection de position détectent le véhicule, un ajustement d'un témoin lumineux de l'installation de services à un deuxième état pour ordonner au véhicule de reculer ; et
si le dispositif de détection de position au niveau du premier point de détection de position détecte le véhicule et le dispositif de détection de position au niveau du deuxième point de détection de position ne détecte pas le véhicule, un ajustement d'un témoin lumineux de l'installation de services à un troisième état pour ordonner au véhicule d'entrer dans un état de stationnement.

4. Procédé selon l'une quelconque des revendications 1 à 3, dans lequel les dispositifs de détection de position sont fournis au niveau d'un troisième point de détection de position et d'un quatrième point de détection de position dans l'installation de services, le procédé comprenant en outre :
si le dispositif de détection de position au niveau du troisième point de détection de position détecte le véhicule, un envoi d'un message d'entrée de véhicule à un serveur pour amener le serveur à réaliser des opérations correspondantes postérieures à une entrée ; et
si le dispositif de détection de position au niveau du quatrième point de détection de position détecte que le véhicule passe le quatrième point de détection de position dans un intervalle de temps prédéfini, un envoi d'un message de départ de véhicule au serveur pour amener le serveur à réaliser des opérations correspondantes postérieures à un départ.

5. Procédé selon la revendication 4, comprenant en outre :
lors d'une détection d'une entrée du véhicule dans une zone de reconnaissance de plaque d'immatriculation prédéterminée dans l'installation de services, une capture d'une image d'une plaque d'immatriculation du véhicule et un envoi de l'image au serveur, amenant ainsi le serveur à acquérir un numéro de compte d'utilisateur correspondant au véhicule sur la base de l'image de la plaque d'immatriculation et identifier le terminal de véhicule sur la base du numéro de compte d'utilisateur ; et
un envoi, au serveur, d'images de visualisation d'environnement du véhicule capturées, et un envoi, par le serveur, des images de visualisation d'environnement au terminal de véhicule pour émission en sortie et affichage.

6. Procédé selon l'une quelconque des revendications 1 à 3, comprenant en outre :
lors d'une détection d'une entrée du véhicule dans une zone de reconnaissance de plaque d'immatriculation prédéterminée dans l'installation de services, une capture d'une image d'une plaque d'immatriculation du véhicule et un envoi de l'image à un serveur, amenant ainsi le serveur à acquérir un numéro de compte d'utilisateur correspondant au véhicule sur la base de l'image de la plaque d'immatriculation et identifier le terminal de véhicule sur la base du numéro de compte d'utilisateur.

7. Procédé selon la revendication 6, comprenant en outre :
un envoi, au serveur, d'images de visualisation d'environnement du véhicule capturées, et un envoi, par le serveur, des images de visualisation d'environnement au terminal de véhicule pour émission en sortie et affichage.

8. Installation de services, **caractérisée par** :
une unité de détection configurée pour détecter, au moyen de dispositifs de détection de position de l'installation de services, le fait qu'un véhicule est stationné ou non dans une zone de services prédéterminée ;
une unité de communication configurée pour amener un terminal de véhicule à afficher des informations d'aide à la conduite pour guider le véhicule pour qu'il stationne dans la zone de services prédéterminée lorsque l'unité de détection détecte que le véhicule n'est pas stationné dans la zone de services prédéterminée ; et
une unité de services configurée pour activer une opération de service pour le véhicule lorsque l'unité de détection détecte que le véhicule est stationné dans la zone de services prédéterminée,
dans laquelle les dispositifs de détection de position sont agencés au niveau d'un premier point de détection de position et d'un deuxième point de détection de position dans l'installation de services, **caractérisée en ce que** :
le premier point de détection de position est situé au niveau d'un côté de la zone de services prédéterminée qui est le plus près de l'entrée de l'installation de services, et dans laquelle le deuxième point de détection de position est situé au niveau d'un côté de la zone de services prédéterminée qui est le plus près d'une sortie de l'installation de services ;
et dans laquelle l'unité de détection est configurée pour :
déterminer que le véhicule n'est pas stationné dans la zone de services prédéterminée si ni le dispositif de détection de position au niveau du premier point de détection de position ni le dispositif de détection de position au niveau du deuxième point de détection de position ne détectent le véhicule ;
déterminer que le véhicule n'est pas stationné dans la zone de services prédéterminée si à la fois le dispositif de détection de position au niveau du premier point de détection de position et le dispositif de détection de position au niveau du deuxième point de détection de position détectent le véhicule ; et
déterminer que le véhicule est stationné dans la zone de services prédéterminée si le dispositif de détection de position au niveau du premier point de détection de position détecte le véhicule et le dispositif de détection de position au niveau du deuxième point de détection de position ne détecte pas le véhicule.

9. Installation de services selon la revendication 8, dans laquelle l'unité de communication comprend :
une première sous-unité de communication configurée pour amener le terminal de véhicule à émettre en sortie de premières informations d'indication pour ordonner au véhicule de se déplacer vers l'avant lorsque ni le dispositif de détection de position au niveau du premier point de détection de position ni le dispositif de détection de position au niveau du deuxième point de détection de position ne détectent le véhicule ; et
une seconde sous-unité de communication configurée pour amener le terminal de véhicule à émettre en sortie de secondes informations d'indication pour ordonner au véhicule de reculer lorsqu'à la fois le dispositif de détection de position au niveau du premier point de détection de position et le dispositif de détection de position au niveau du deuxième point de détection de position détectent le véhicule.

10. Installation de services selon la revendication 8 ou 9, comprenant en outre une unité d'ajustement configurée pour :
ajuster un témoin lumineux de l'installation de services à un premier état pour ordonner au véhicule de se déplacer vers l'avant lorsque ni le dispositif de détection de position au niveau du premier point de détection de position ni le dispositif de détection de position au niveau du deuxième point de détection de position ne détectent le véhicule ;
ajuster un témoin lumineux de l'installation de services à un deuxième état pour ordonner au véhicule de reculer lorsqu'à la fois le dispositif de détection de position au niveau du premier point de détection de position et le dispositif de détection de position au niveau du deuxième point de détection de position détectent le véhicule ; et
ajuster un témoin lumineux de l'installation de services à un troisième état pour ordonner au véhicule d'entrer dans un état de stationnement lorsque le dispositif de détection de position au niveau du premier point de détection de position détecte le véhicule et le dispositif de détection de position au niveau du deuxième point de détection de position ne détecte pas le véhicule.
